(19) Europäisches Patentamt
European Patent Office
Office européen des brevets

(11) Veröffentlichungsnummer: **0 504 681 A1**

(12) **EUROPÄISCHE PATENTANMELDUNG**

(21) Anmeldenummer: **92103888.1**

(22) Anmeldetag: **06.03.92**

(51) Int. Cl.⁵: **C08G 18/18**, C08G 18/10, C09J 175/12, C09J 175/04

(30) Priorität: **19.03.91 DE 4108877**

(43) Veröffentlichungstag der Anmeldung: **23.09.92 Patentblatt 92/39**

(84) Benannte Vertragsstaaten: **AT BE CH DE ES FR GB IT LI NL SE**

(71) Anmelder: **BAYER AG**
**W-5090 Leverkusen 1 Bayerwerk(DE)**

(72) Erfinder: **Stepanski, Horst, Dr.**
**Rolandstrasse 22**
**W-5090 Leverkusen 3(DE)**
Erfinder: **Colinas-Martinez, José**
**Am Stumpf 19**
**W-5632 Wermelskirchen 2(DE)**
Erfinder: **Trinks, Rainer, Dr.**
**Im Daubenthal 3**
**W-4047 Dormagen(DE)**
Erfinder: **Jansen, Bernhard, Dr.**
**Roggendorfstrasse 65**
**W-5000 Köln 80(DE)**
Erfinder: **Müller, Hanns-Peter, Dr.**
**Hollweg 20**
**W-5068 Odenthal(DE)**
Erfinder: **Ganster, Otto, Dr.**
**Droste-Hülshoff-Strasse 5**
**W-5068 Odenthal(DE)**

(54) **Verfahren zur Verklebung von Substraten aus glasfaserverstärktem Polyesterharz.**

(57) Die vorliegende Erfindung betrifft ein Verfahren zum Verkleben von Substraten aus glasfaserverstärktem Polyesterharz (SMC oder BMC) bei Raumtemperatur ohne Vorbehandlung, unter Verwendung von Klebstoffen, enthaltend ein Isocyanatprepolymer a), eine isocyanatreaktive Komponente b) sowie einen Katalysator für die Umsetzung von a) und b), wobei als Katalysator eine Verbindung der Formel

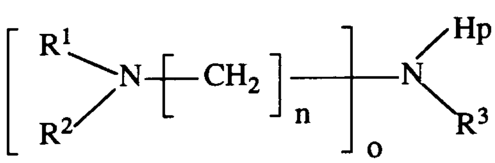

enthalten ist, worin bedeuten

| | |
|---|---|
| $R^1$, $R^2$ | gleich oder verschieden, Alkyl mit 1 bis 4 C-Atomen, insbesondere Methyl und Ethyl, |
| $R^3$ | ein CHO-Rest, oder H, oder Alkyl mit 1 bis 4 C-Atomen, gegebenenfalls substituiert mit einem CHO-Rest, |
| n | ganze Zahl von 2 bis 4, |
| o | 1 oder2, |
| p | 0 oder 1, |

o + p = 2.

EP 0 504 681 A1

Die Erfindung betrifft ein Verfahren zum Verkleben von aus ungesättigtem Polyesterharz hergestellten Teilen. Dabei wird die Verklebung bei Raumtemperatur ohne vorherige Oberflächenbehandlung durchgeführt.

Bei der Verklebung von Formteilen aus ungesättigtem Polyesterharz, insbesondere SMC und BMC, ist es üblich, die Fügeteiloberfläche vor dem Fügen vorzubehandeln. Dies hat zum einen den Zweck, die Oberfläche aufzurauhen oder zu aktivieren; zum anderen wird dadurch ein an der Oberfläche befindliches externes oder internes Trennmittel entfernt bzw. unwirksam gemacht. In einer Vielzahl von Veröffentlichungen werden hierfür geeignete Verfahren beschrieben (vgl. z.B. US-PS 3 647 513, 3 703 426, 3 838 093, 3 962 498, 4 004 050, 4 397 707, 3 714 127, 3 886 122, 3 933 051, 3 812 003, 4 247 676, 4 336 298, 4 373 082, 4 390 678, 4 444 976, 4 552 934, 4 595 445 und 4 624 996).

In einigen Veröffentlichungen werden Klebstoffe und Klebverfahren beschrieben, die ein Verkleben von Polyesterharzteilen ohne Oberflächenvorbehandlung erlauben:

a) "Fusor 320/321 & Fusor 320/322"
Product Information, Lord Corp., Erie, PA (USA), June 10, 1985

b) Anil B. Goel
"New Pliogrip Hybrid Structural Adhesive"
Effective Adhesive Applications for the Automotive Eng., Soc. of Manufact. Eng., Oct. 21-23, 1986
The Westin Hotel, Detroit, Michigan, USA

c) EP 0 328 808

d) US PS 4 923 756

e) US PS 4 876 308

Alle diese Veröffentlichungen beschreiben jedoch Klebverfahren bei denen das Abbinden des Klebstoffes bei erhöhten Temperaturen, vorzugsweise höher als 100 ° C erfolgt.

Der vorliegenden Erfindung lag nun die Aufgabe zugrunde, einen rasch abbindenden Klebstoff bereitzustellen, der auch bei niedrigen Temperaturen, vorzugsweise im Bereich der Raumtemperatur, eine gute Substrathaftung auf SMC und ähnlichen Werkstoffen ohne Oberflächenvorbehandlung ergibt.

Ein Abbinden bei Umgebungstemperaturbedingungen hat zum einen wirtschaftliche Vorteile, da auf Heizvorrichtungen sowie hierfür erforderliche Energieaufwendungen verzichtet werden kann. Zum anderen ist eine Heißhärtung häufig aus konstruktiven oder fertigungstechnischen Gründen nicht durchführbar oder sie führt aufgrund unterschiedlicher Wärmeausdehnungskoeffizienten zu Verzug oder Oberflächenstörungen ("read-through").

Ein Primern hat den wirtschaftlichen Nachteil, daß damit ein zusätzlicher Fertigungsschritt verbunden ist, der nur schwer automatisierbar ist. Häufig sind die dafür verwendeten Substanzen unter den in der Praxis üblichen Applikationsbedingungen gewerbehygienisch nicht unbedenklich.

Gegenstand der Erfindung ist ein Verfahren zur Verklebung von Substraten aus glasfaserverstärktem Polyesterharz (SMC oder BMC), insbesondere dadurch gekennzeichnet, daß ein Zweikomponenten-Polyurethanklebstoff verwendet wird, enthaltend eine Isocyanatkomponente a), eine isocyanatreaktive Komponente b) sowie einen Katalysator für die Umsetzung von a) und b), dadurch gekennzeichnet, daß als Katalysator eine Verbindung der Formel

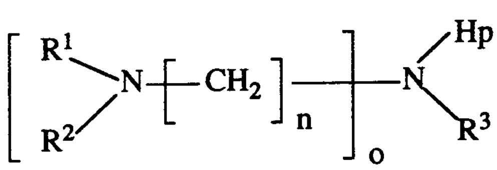

enthalten ist, worin bedeuten

| | |
|---|---|
| $R^1$, $R^2$ | gleich oder verschieden, Alkyl mit 1 bis 4 C-Atomen, insbesondere Methyl und Ethyl |
| $R^3$ | ein CHO-Rest, oder H, oder Alkyl mit 1 bis 4 C-Atomen, gegebenenfalls substituiert mit einem CHO-Rest, |
| n | ganze Zahl von 2 bis 4, |
| o | 1 oder 2, |
| p | O oder 1, |

$o + p = 2$.

In einer bevorzugten Ausführungsform sind in der Komponente b) enthalten:

b1) 100 Gewichtsteile wenigstens einer hydroxylgruppenhaltigen Verbindung mit einem Molekulargewicht von mindestens 400 und einer Hydroxylfunktionalität von mindestens 2

b2) 2-20 Gewichtsteile wenigstens eines aliphatischen, aromatischen oder cycloaliphatischen Diamins oder Triamins mit einem Molekulargewicht von mindestens 60 sowie gegebenenfalls

b3) 5-40 Gewichtsteile wenigstens eines hydroxylgruppenhaltigen, niedermolekularen Kettenverlängerers mit einem Molekulargewicht von mindestens 62 und einer Funktionalität von mindestens 2.

In einer bevorzugten Ausführungsform sind in den Teilkomponenten a) und b) weiter übliche Hilfs- und Zusatzstoffe enthalten. In einer besonders bevorzugten Ausführungsform ist der Katalysator in der Komponente b) enthalten. Der Katalysator wird vorzugsweise in einer solchen Menge eingesetzt, daß pro 100 g in der Komponente b) mindestens 0,005 g tertiärer Aminstickstoff enthalten ist unter Berücksichtigung des gegebenenfalls als Komponente b1) enthaltenen tertiären Stickstoffs.

Als Isocyanatkomponenten kommen vor allen Dingen Verbindungen der folgenden Formel in Frage:

$Q(NCO)_{n'}$

in der

n = 2 bis 4, vorzugsweise 2, und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten.

Bevorzugte Polyisocyanate sind Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanate-3,3,5-trimethyl-5-isocyanato-methylcyclohexan, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4'-diisocyanat, Naphthylen-1,5-diisocyanat, Triphenylmethan-4,4',4''-triisocyanat oder Polyphenyl-polymethylenpolyisocyanate, wie sie durch Anilin-Formaldehyd-Kondensation und anschließende Phosgenierung erhalten werden.

Besonders geeignete Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Polyisocyanaten der obengenannten allgemeinen Formel hergestellt werden können. Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10.000, vorzugsweise 600 bis 8.000 und insbesondere 800 bis 5.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 400, wie z.B. Ethylenglykol, Trimethylolpropan, Propandiol-1,2 oder Butandiol-1,2, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, in der Regel 2 bis 8, vorzugsweise aber 2 bis 4, primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von ca. 1,5:1 bis 20:1, vorzugsweise 5:1 bis 15:1, zur Umsetzung gebracht. Die NCO-Prepolymeren weisen im allgemeinen einen NCO-Gehalt von 2,5 bis 25, vorzugsweise 6 bis 22, Gew.-% auf. Hieraus geht bereits hervor, daß im Rahmen der vorliegenden Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Für die erfindungsgemäße Isocyanatkomponente a) besonders bevorzugte Ausgangsverbindungen sind die in der Polyurethanchemie üblichen technischen Polyisocyanate, d.h. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanato-dicyclohexylmethan, 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Ganz besonders bevorzugt sind Isocyanatprepolymere von Isocyanaten aus der Diphenylmethanreihe mit Polyethern der Funktionalität 2 oder 3 und Molekulargewichten von 500 bis 10.000 g/Mol, besonders jedoch von 1.000 bis 8.000 g/Mol, insbesondere von 1.500 bis 7.000 g/Mol. Zu den gegebenenfalls mitzuverwendenden Hilfs- und Zusatzstoffen zählen beispielsweise Füllstoffe, Farbstoffe und Pigmente.

Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibole, Chrisotil, Talkum; Metalloxide wie Kaolin, Aluminiumoxide, Titanoxide und Eisenoxide, Metallsalze wie Kreide Schwerspat und anorganische Pigmente, wie Cadmiumsulfid, Zinksulfid sowie Glas, Asbestmehl u.a. Vorzugsweise verwendet werden natürliche und synthetische faserförmige Materialien wie Asbest, Wollastonit und insbesondere Glasfasern verschiedener Länge, die gegebenenfalls geschlichtet sein können.

Füllstoffe können einzeln oder als Gemisch verwendet werden.

Die Füllstoffe werden, falls überhaupt, der Reaktionsmischung vorteilhafterweise in Mengen von bis zu 50 Gew.-%, vorzugsweise bis zu 30 Gew.-%, bezogen auf das Gewicht der Komponenten a) und b), zugegeben.

Nähere Angaben über die üblichen Hilfs- und Zusatzstoffe sind der Fachliteratur, beispielsweise der Monographie von J.H. Saunders und K.C. Frisch "High Polymeres" Band XVI, Polyurethanes, Teil 2 und 7, Verlag Interscience Publishers 1962 bzw. 1964, zu entnehmen.

Bei der Komponente b1) des erfindungsgemäßen Systems handelt es sich vorzugsweise um mindestens eine organische Verbindung mit einem Molekulargewicht von 400 bis 12.000, vorzugsweise 400 bis 6.000, mit 2 bis 8, vorzugsweise 2 bis 5, Hydroxylfunktionen. Die hier angegebenen Molekulargewichte sind aus der OH-Zahl der Substanz über folgende Beziehung zu errechnen:

$$\text{Molekulargewicht} = \frac{56.000}{\text{OH-Zahl}} \times \text{Funktionalität}.$$

Es können beispielsweise Polyhydroxypolyether der aus der Polyurethanchemie an sich bekannten Art verwendet werden, wie sie durch Alkoxylierung geeigneter Startermoleküle wie Ethylenglykol, Diethylenglykol, 1,4-Dihydroxybutan, 1,6-Dihydroxyhexan, Trimethylolpropan, Glycerin, Pentaerythrit, Sorbit oder Saccharose zugänglich sind. Als Starter können ebenfalls fungieren: Ammoniak oder Amine wie Ethylendiamin, Hexamethylendiamin, 2,4-Diaminotoluol, Anilin oder Aminoalkohole. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung der beispielhaft genannten niedermolekularen Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-A-2 324 134, 2 423 984, 2 512 385, 2 513 815, 2 550 796, 2 550 797, 2 550 833, 2 550 862, 2 633 293 und 2 639 254 beschrieben. Es ist aber auch möglich gemäß US-A-3

869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 536) oder Polycarbonatpolyolen (DE-PS 1 769 795; US-A-3 637 909) erhalten werden, sind für das erfindungsgemäße Verfahren als Komponente b) geeignet. Bei Verwendung von Polyetherpolyolen, welche gemäß DE-A-2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)-acrylsäureestern modifiziert wurden, erhält man Kunststoffe von besonderer Flammwidrigkeit.

Vertreter der genannten erfindungsgemäß als Verbindungen b1) zu verwendenden Verbindungen sind z.B. in High Polymers, Vol. XVI, "Polyurethanes, Chemistry and Technology", verfaßt von Saunders-Frisch, Interscience Publishers, New York, London. Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Bevorzugte Amine b2) haben ein Molekulargewicht von 60 bis 300. Besonders bevorzugt sind dabei Diamine wie 1,4-Diaminobenzol, 2,4-Diaminotoluol, 2,4'- und/oder 4,4'-Diaminodiphenylmethan oder vorzugsweise solche Diamine, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen aufweisen, besonders bevorzugt um solche, die in jeweils mindestens einer ortho-Stellung zu dem Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesitylen, 1,3,5-Triethyl-2,4-diaminobenzol, 1,3,5 Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan. Beliebige Gemische derartiger aromatischer Diamine können ebenfalls eingesetzt werden.

Besonders bevorzugte aliphatische Diamine sind Isophorondiamin, Bis-(4-aminocyclohexyl)-methan, 1,4-Diaminocyclohexan, Ethylendiamin und seine Homologen und Piperazin.

Bevorzugte Polyole b3) sind niedermolekulare mehrwertige Alkohole mit einem Molekulargewichtsbereich von 62 bis 400, wie die bereits als Startermoleküle unter b1) erwähnten Substanzen wie Ethylenglykol, Diethylenglykol, 1,4-Dihydroxybutan, 1,6-Dihydroxyhexan, Trimethylolpropan, Glycerin, Pentaerythrit, Sorbit oder Saccharose. Besonders bevorzugt sind mehrwertige Alkohole mit einer Funktionaliät von 2.

Bevorzugte erfindungsgemäße Katalysatoren sind im folgenden angegeben:

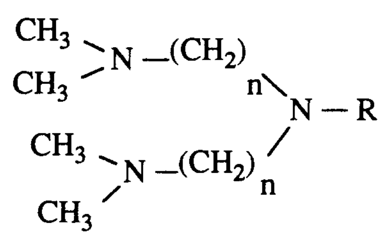

mit n = 2, 3 und R = H, CHO oder $CH_3$.

Besonders bevorzugte Katalysatoren sind:

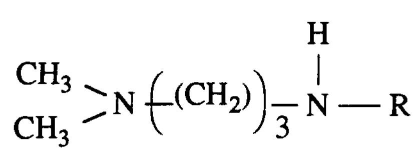

sowie

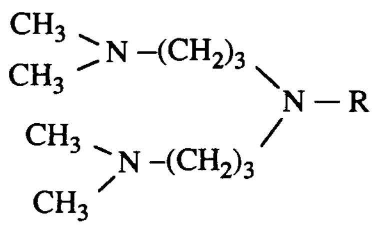

und

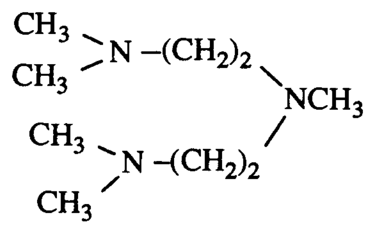

mit R = CHO oder H.

Die genannten Katalysatoren besitzen den Vorteil, den Polyolgemischen, denen sie beigemischt werden, bessere Lagerstabilität zu verleihen. Das heißt, es unterbleiben größtenteils Effekte wie Phasenseparationen und Abscheidungen von flüssigen Bestandteilen.

Das erfindungsgemäße Klebeverfahren eignet sich insbesondere für die Verklebung von Kunststoffen, Metallen, Holz und Glas.

Die Anwendung des Zweikomponenten-Polyurethanklebstoffes erfolgt vorzugsweise durch kontinuierliches Mischen der beiden Komponenten a) und b) entweder in einem Rührermischer, in einem statischen Mischer oder in einem Gegenstrom-Mischer und sofortigen Auftrag des fertigen Klebstoffes als Raupe auf mindestens eines der zu verklebenden Substrate. Eine Vorbehandlung der Substratoberflächen im Sinne einer Reinigung, Aufrauhung oder einer sonstigen Vorbehandlung ist häufig nicht erforderlich. Die Mengenverhältnisse von Isocyanat- zu Polyolkomponenten folgen den allgemein in der Isocyanatchemie geltenden Prinzipien; es wird mit geringfügigem Isocyanatüberschuß gearbeitet (Kennzahlbereich: 100 bis 125, bevorzugt: 100 bis 115).

Die mit Klebstoff versehenen Substrate werden zusammengelegt, fixiert und entweder bei Raumtemperatur aushärten gelassen bzw. einem Härtungsprozeß bei erhöhter Temperatur unterworfen. Bei erhöhter Temperatur kann der Zustand der Handfestigkeit schneller erreicht werden als bei Raumtemperatur.

Die gewünschte offene Zeit bzw. Aushärtezeit kann durch die Wahl der Aushärtetemperatur und Wahl des Katalysators b4) in weiten Grenzen variiert werden.

Ein weiterer Vorteil des erfindungsgemäßen Klebstoffs besteht darin, daß er lösungsmittelfrei verarbeitet werden kann.

Beispiele

Im folgenden verwendete Abkürzungen:

Isocyanat 1 (Roh-MDI)

4,4'-Diisocyanatodiphenylmethan im Gemisch mit seinen Isomeren und höheren Homologen, wie sie durch Phosgenierung von Anilin-Formaldehyd-Kondensaten erhalten werden, NCO-Gehalt: 30,4%.

Isocyanat 2

Reines 4,4'-Diisocyanatodiphenylmethan, welches ancarbodiamidisierte Anteile enthält, NCO-Gehalt 30%.

Polyether 1

In Analogie zu Beispiel 1 der DE-A-2 638 759 wird ein Füllstoffpolyether hergestellt, wobei als "Lösungsmittel" 5070 Gew.-Teile eines Polyetherpolyols der OH-Zahl 35, hergestellt durch Propoxylierung von Trimethylolpropan und Ethoxylierung des Propoxylierungsprodukts (PO:EO-Verhältnis = 83:17), an Stelle der 670 Gew.-Teile Hydrazinhydrat lediglich 380 Gew.-Teile Hydrazinhydrat und an Stelle der 2310 Gew.-Teile Toluylendiisocyanat lediglich 1320 Gew.-Teile des Diisocyanates eingesetzt werden.

Es resultiert ein Polyether mit einem Gehalt an organischen Füllstoff von 20 Gew.-% und einer Hydroxylzahl von 28 mg KOH/g.

Polyether 2

Ein Polyetherpolyol, auf Trimethylolpropan gestartet, umgesetzt mit Propylenoxid und Weiterreaktion des Propoxylierungsproduktes unter Ethoxylierung. (PO:EO-Verhältnis = 86,5:13,5); OH-Zahl: 35 mg KOH/g.

Polyether 3

Ein Polyetherpolyol, auf Trimethylolpropan gestartet, umgesetzt mit Propylenoxid und Weiterreaktion des Propoxylierungsproduktes unter Ethoxylierung. (PO:EO-Verhältnis = 82,5:17,5); OH-Zahl: 28 mg KOH/g.

IPDA

Cycloaliphatisches Diamin der Struktur:

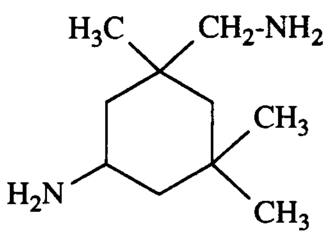

Zeolith-Paste

eine 50 %ige Zeolith-Suspension in Rizinusöl.

Katalysator

Tertiärer Amin-Katalysator der Struktur

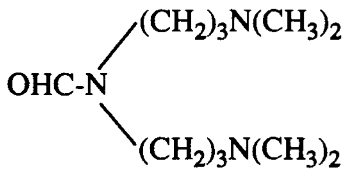

Prepolymer 1 (Vergleichsbeispiel)

750 Gew.-Teile Isocyanat 1 werden bei 60 °C vorgelegt und 247 Gew.-Teile Polyether 2 innerhalb einer Stunde zugetropft. Nach erfolgter Zugabe wird bei 60 °C weiter gerührt, bis der Isocyanatgehalt auf 22,5 % abgesunken ist.

Prepolymer 2 (erfindungsgemäß)

770 Gew.-Teile Isocyanat 2 werden bei 60 ° C vorgelegt und 235 Gew.-Teile Polyether 2 innerhalb einer Stunde zugetropft. Nach erfolgter Zugabe wird bei 60 ° C weiter gerührt, bis der Isocyanatgehalt 22,5 % beträgt.

Prepolymer 3 (erfindungsgemäß)

750 Gew.-Teile Isocyanat 2 werden bei 60 ° C vorgelegt und 204,3 Gew.-Teile Polyether 3 innerhalb einer Stunde zugetropft. Nach erfolgter Zugabe wird bei 60 ° C weiter gerührt, bis der Isocyanatgehalt 22,5 % beträgt.

Polyolmischung 1

100 Gew.-Teile Polyether 1, 10 Gew.-Teile Butandiol-1,4, 15 Gew.-Teile cis-Butendiol-1,4, 2 Gew.-Teile IPDA, 6 Gew.-Teile Zeolith-Paste und 0,4 Gew.-Teile des aminischen Katalysators werden zusammengegeben und homogen vermischt. Die OH-Zahl der Mischung beträgt 269 mg KOH/g.

Polyolmischung 2

100 Gew.-Teile Polyether 1, 25 Gew.-Teile Butandiol-1,4, 2-Gew.-Teile IPDA, 6 Gew.-Teile Zeolith-Paste und 0,4 Gew.-Teile des aminischen Katalysators werden zusammengegeben und homogen vermischt. Die OH-Zahl der Mischung beträgt 269 mg KOH/g.

Fügeteile

Glasfaserverstärktes Polyesterharz:
SMC Typ 832 (DIN 16 913) der Fa. Fibron, Bretten (4 mm dick). Aus gepreßten Platten werden Prüfkörper von 40 mm Länge und 20 mm Breite geschnitten. Der beim Schneiden entstandene Staub wird durch Waschen in entsalztem Wasser ohne weitere Reinigungszusätze entfernt. Nach dem Trocknen werden die Prüfkörper ohne weitere Oberflächenbehandlung verklebt.

| Mischtabelle für die Umsetzung der Polyolmischungen 1 und 2 mit den Prepolymeren 1, 2 und 3 | | | | |
|---|---|---|---|---|
| Beispiel | Polyol-Mischung | Prepolymer | Kennzahl | Bemerkung |
| 1 | 1 | 3 | 115 | erfindungsgemäß |
| 2 | 1 | 2 | 115 | erfindungsgemäß |
| 3 | 1 | 1 | 115 | Vergleichsbeispiel |
| 4 | 2 | 3 | 115 | erfindungsgemäß |

Ergebnisse der Verklebungsversuche im Zugscherversuch

Für die Prüfung der Zugscherfestigkeiten nach DIN 53 283 wurden einschnittig überlappte Verbindungen aus den SMC-Fügeteilen hergestellt. Die Klebfugendicke betrug 0,8 mm, die Probenbreite 20 mm, die Überlappungslänge 10 mm. Das Abbinden der Klebstoffe erfolgte bei Raumtemperatur, ebenso die Ermittlung der Zugscherfestigkeit.

| Beispiel | 1 | 2 | 3 | 4 |
|---|---|---|---|---|
| Mittelwert der Zugscherfestigkeit [N/$mm^2$] | 8,1 | 7,5 | 7,4 | 8,3 |
| Standardabweichung aus 10 Messungen | 0,9 | 1,2 | 1,5 | 1,2 |
| Bruchbeurteilung | 100% FT | 70%FT<br>30%A | 100%A | 100%FT |
| dabei bedeutet:<br>FT: Fügeteilversagen durch Faserausriß<br>A : Adhäsives Versagen | | | | |

**Patentansprüche**

1. Verfahren zum Verkleben von Substraten aus glasfaserverstärktem Polyesterharz (SMC oder BMC) bei Raumtemperatur ohne Vorbehandlung, unter Verwendung von Klebstoffen, enthaltend ein Isocyanatprepolymer a), eine isocyanatreaktive Komponente b) sowie einen Katalysator für die Umsetzung von a) und b) dadurch gekennzeichnet, daß als Katalysator eine Verbindung der Formel

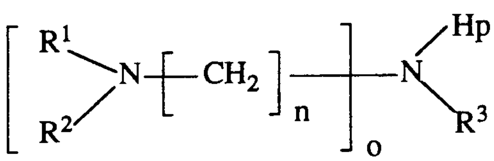

enthalten ist, worin bedeuten

$R^1$, $R^2$ gleich oder verschieden, Alkyl mit 1 bis 4 C-Atomen, insbesondere Methyl und Ethyl,
$R^3$ ein CHO-Rest, oder H, oder Alkyl mit 1 bis 4 C-Atomen, gegebenenfalls substituiert mit einem CHO-Rest,
n ganze Zahl von 2 bis 4,
o 1 oder 2,
p 0 oder 1,

$o + p = 2$.

2. Verfahren nach Anspruch 1, dadurch gekennzeichnet, daß die Komponente b) enthält,
   b1) 100 Gewichtsteile wenigstens einer hydroxylgruppenhaltigen Verbindung mit einem Molekulargewicht von mindestens 400 und einer Hydroxylfunktionalität von mindestens 2
   b2) 2-20 Gewichtsteile wenigstens eines aliphatischen, aromatischen oder cycloaliphatischen Diamins oder Triamins mit einem Molekulargewicht von mindestens 60 sowie gegebenenfalls
   b3) 5-40 Gewichtsteile wenigstens eines hydroxylgruppenhaltigen, niedermolekularen Kettenverlängerers mit einem Molekulargewicht von mindestens 62 und höchstens 400 und einer Funktionalität von mindestens 2.

3. Klebstoff nach einem der Ansprüche 1-2, dadurch gekennzeichnet, daß als Komponente b) enthalten sind
   b1) ein Polyetherpolyol, erhältlich durch Alkoxylierung von Trimethylolpropan
   b2) ein Cyclohexanderivat
   b3) ein Butandiol und/oder ein Butendiol.

4. Verfahren nach einem der Ansprüche 1-3, dadurch gekennzeichnet, daß die Isocyanatkomponente a) bei Raumtemperatur flüssig ist.

5. Verfahren nach einem der Ansprüche 1-4, dadurch gekennzeichnet, daß als Isocyanatkomponente a)

ein Isocyanat-Prepolymer auf Basis eines Isocyanates der Diphenylmethanreihe oder ein Derivat dann verwendet wird.

6. Verfahren nach einem der Ansprüche 1-5, dadurch gekennzeichnet, daß Isocyanat-Prepolymer gemäß Anspruch 5 ein Umsetzungsprodukt eines Isocyanates der Diphenylmethanreihe mit Polyetherpolyolen der Funktionalität 2 oder 3 und Molekulargewichten von 500 bis 10.000 g/mol, besonders jedoch zu 1000 bis 8000 g/mol, insbesondere von 1500 bis 7000 g/mol darstellt.

7. Verfahren nach einem der Ansprüche 1-6, dadurch gekennzeichnet, daß als Katalysator eine Verbindung der Formel

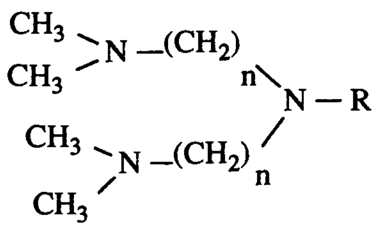

und/oder

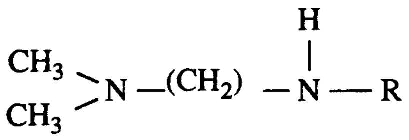

mit n = 2,3 und R = H, CHO oder $CH_3$

enthalten ist.

8. Verfahren nach einem der Ansprüche 1-2, dadurch gekennzeichnet, daß ein Überschuß der Isocyanatgruppen gegenüber den isocyanatreaktiven Gruppen vorliegt.

9. Verfahren nach einem der Ansprüche 1-8, dadurch gekennzeichnet, daß der Katalysator in einer Menge enthalten ist, daß pro 100 g der Komponente b) mindestens 0,005 g tertiäre Aminstickstoffe enthalten ist.

10. Verfahren nach einem der Ansprüche 1-9, dadurch gekennzeichnet, daß der Klebstoff unter Verwendung von Hochfrequenz, Mikrowelle oder bei Raumtemperatur ausgehärtet wird.

Europäisches Patentamt

# EUROPÄISCHER RECHERCHENBERICHT

Nummer der Anmeldung

EP 92 10 3888

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 411 432 (BAYER)<br>* Ansprüche 1-10 *<br>* Seite 3, Zeile 33 - Seite 4, Zeile 17 *<br>* Seite 6, Zeile 5 - Zeile 18 *<br>--- | 1-10 | C08G18/18<br>C08G18/10<br>C09J175/12<br>C09J175/04 |
| Y | US-A-3 812 003 (W,M. LARSON ET AL.)<br>* Anspruch 1 *<br>* Spalte 4, Zeile 13 - Zeile 20 *<br>----- | 1-10 | |
| | | | **RECHERCHIERTE SACHGEBIETE (Int. Cl.5 )** |
| | | | C08G<br>C09J<br>C08J |

Der vorliegende Recherchenbericht wurde für alle Patentansprüche erstellt

| Recherchenort | Abschlußdatum der Recherche | Prüfer |
|---|---|---|
| DEN HAAG | 06 JULI 1992 | VAN PUYMBROECK M. A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)